# EUROPEAN PATENT APPLICATION

(11) **EP 4 354 546 A1**
(43) Date of publication of application: **17.04.2024**
(21) Application number: 22820096.0
(22) Date of filing: 31.05.2022
(51) Int. Cl.: H01M 4/48, H01M 4/36

(54) **NEGATIVE ELECTRODE ACTIVE MATERIAL, NEGATIVE ELECTRODE, AND LITHIUM ION SECONDARY BATTERY**

(30) Priority: 08.06.2021 JP 2021095807
(71) Applicant: SHIN-ETSU CHEMICAL CO., LTD., Tokyo 1000005 (JP)
(72) Inventor: TSUKIGATA, Shintarou, Annaka-shi, Gunma 379-0125 (JP); YOSHIOKA, Mahiro, Annaka-shi, Gunma 379-0125 (JP); Otosaka, Tetsuya, Annaka-shi, Gunma 379-0125 (JP)
(74) Representative: Sonnenhauser, Thomas Martin
(86) International application number: PCT/JP2022/022103
(87) International publication number: WO 2022/259914

(57) **Abstract**

The present invention is a negative electrode active material including silicon monoxide particles, wherein the silicon monoxide particles satisfy that, in volumetric basis distribution measured with a laser-diffraction method particle size distribution measurement device, an accumulative 0.1%-particle-size D0.1 satisfies 1.2 um ≤ D0.1 ≤ 3.0 um, an accumulative 10%-particle-size D10 satisfies 3.5 um ≤ D10 ≤ 7.0 µm, an accumulative 50%-particle-size D50 satisfies 6.0 um ≤ D50 ≤ 15.0 µm, and an accumulative 99.9%-particle-size D99.9 satisfies 25.0 um ≤ D99.9 ≤ 50.0 um, and the silicon monoxide particles satisfy that a BET specific surface area Sₘ satisfies 1.0 m²/g ≤ Sₘ ≤ 3.5 m²/g. This provides a negative electrode active material that can improve cycle characteristics when used as the negative electrode active material for a negative electrode of a secondary battery.

## Description

### TECHNICAL FIELD

The present invention relates to a negative electrode active material, a negative electrode, and a lithium-ion secondary battery.

### BACKGROUND ART

Small-sized electronic devices represented by mobile terminals have been widespread in in recent years, and further miniaturizing, lightweight, and longer lifetime are strongly demanded. For such market demands, in particular, development of small-sized and lightweight secondary batteries that can yield a high energy density is in progress. It is investigated that this secondary battery is applied for not only the small-sized electronic devices but also large-sized electronic devices represented by automobiles and for power storage systems represented by houses.

Among these, a lithium-ion secondary battery has been widespread because the lithium-ion secondary battery has a small size, easily has an increased capacity, and can yield a higher energy density than a lead battery and a nickelcadmium battery.

The above lithium-ion secondary battery has a positive electrode, a negative electrode, a separator, and an electrolyte liquid, and the negative electrode contains a negative electrode active material, which is involved with charge-discharge reactions.

For this negative electrode active material, a carbon-based active material is widely used, and meanwhile, the recent market demands have required further increase in a battery capacity. For increasing the battery capacity, use of silicon as a material for the negative electrode active material is investigated. This is because a theoretical capacity of silicon (4199 mAh/g) is ten times or more higher than a theoretical capacity of graphite (372 mAh/g), and thereby a remarkable increase in the battery capacity is expected. Development of the silicon material as the material for the negative electrode active material is investigated on not only a silicon single substance but also compounds, etc. represented by an alloy and an oxide. A form of the active material is investigated from an applying type, which is standard in the carbon-based active material, to an integrated type in which the active material is directly deposited on a current collector.

However, use of the silicon single substance for the silicon-based material as the negative electrode active material causes the negative electrode active material to expand and contract with charge and discharge, easily leading to cracking mainly near a surface layer of the negative electrode active material. In addition, an ionic substance is generated inside the active material, which causes the negative electrode active material to be a fragile substance. Cracking of the surface layer of the negative electrode active material consequently generates a new surface to increase a reaction area of the active material. In this time, a decomposed reaction of the electrolyte liquid occurs on the new surface, and a coating being a decomposition product of the electrolyte liquid is formed on the new surface to consume the electrolyte liquid. Therefore, cycle characteristics are likely to be deteriorated.

There have been various investigations so far on the material of the negative electrode active material for the lithium-ion secondary battery with the silicon-based material as a main material and electrode constitution in order to improve battery initial efficiency and the cycle characteristics.

Specifically, silicon and amorphous silicon dioxide are simultaneously deposited by using a gas phase method for a purpose of obtaining good cycle characteristics and high safety (see Patent Document 1, for example). To obtain a high battery capacity and safety, a carbon material (electron conductive material) is provided on surface layers of silicon oxide particles (see Patent Document 2, for example). To improve the cycle characteristics and to obtain high input-output characteristics, an active material containing silicon and oxygen is produced, and an active material layer having a higher oxygen proportion is formed near a current collector (see Patent Document 3, for example). To improve the cycle characteristics, a silicon active material containing oxygen is formed so as to have an average oxygen content of 40 at% or less and to have a large oxygen content near a current collector (see Patent Document 4, for example).

To improve first charge-discharge efficiency, a nanocomposite containing a Si phase, SiO₂, and an M_{y}O metal oxide is used (see Patent Document 5, for example). To improve the cycle characteristics, SiOₓ (0.8≤x≤1.5, particle size range = 1 um to 50 um) and a carbon material are mixed and calcined at high temperature (see Patent Document 6, for example). To improve the cycle characteristics, a mole ratio of oxygen to silicon in a negative electrode active material is set to 0.1 to 1.2 to control the active material within a range that a difference between a maximum value and a minimum value of the mole ratio near an interface between the active material and a current collector is 0.4 or less (see Patent Document 7, for example). To improve battery load characteristics, a metal oxide containing lithium is used (see Patent Document 8, for example). To improve the cycle characteristics, a hydrophobic layer such as a silane compound is formed on a surface layer of a silicon material (see Patent Document 9, for example).

To improve the cycle characteristics, silicon oxide is used, and a graphite coating is formed on a surface layer of the silicon oxide to impart conductivity (see Patent Document 10, for example). In Patent Document 10, shift values obtained from a RAMAN spectrum on the graphite coating are as follows: broad peaks appear at 1330 cm⁻¹ and 1580 cm⁻¹ and an intensity ratio thereof I₁₃₃₀/I₁₅₈₀ satisfies 1.5<I₁₃₃₀/I₁₅₈₀<3. To achieve a high battery capacity and to improve the cycle characteristics, particles having a silicon fine crystal phase dispersed in silicon dioxide is used (see Patent Document 11, for example). To improve overcharge and overdischarge characteristics, a silicon oxide with regulated atom number ratio between silicon and oxygen of 1:y (0<y<2) is used (see Patent Document 12, for example).

As a lithium-ion secondary battery using silicon oxide, Hitachi Maxell, Ltd. started to ship rectangular secondary batteries adopting a nano-silicon composite for smartphones in June, 2010 (see Non Patent Document 1, for example). Silicon oxide proposed by Hohl is a composite material of Si⁰⁺ to Si⁴⁺, which has various oxidation states (Non Patent Document 2). Kapaklis proposes a disproportionation structure in which a thermal load is applied to silicon oxide to cause separation into Si and SiO₂ (Non Patent Document 3). Among silicon oxides having the disproportionation structure, Miyachi, et al. focus on Si and SiO₂ that contribute to charge and discharge (Non Patent Document 4).

To improve the cycle characteristics, a silicon oxide powder in which particle size distribution of a mode size, D50, and D90 is regulated is used (for example, Patent Document 13). In the particle size distribution, D50 represents an accumulative 50%-size, D90 represents an accumulative 90%-size, and the same applies to other values. To improve the cycle characteristics, in a silicon oxide powder crushed with a boll mill and then wet-classified with water, D90, D90/D10, and an amount of fine powder with 1 um or less are regulated (for example, Patent Document 14). To improve first discharge capacity and cycle characteristics, used is a silicon oxide powder in which D50/D10 of a silicon oxide powder before formation of a carbon coating and a BET specific surface area of a negative electrode active material after formation of the carbon coating are regulated (for example, Patent Document 15). To improve the cycle characteristics, regulated in a negative electrode active material composed of silicon oxide with a formed carbon coating is a ratio between: a specific surface area calculated from particle size distribution of the negative electrode active material with assumption that the particles are spheres; and a BET specific surface area of the negative electrode active material (for example, Patent Document 16). D10 and D90 of a negative electrode active material composed of silicon oxide after formation of a carbon coating is regulated (for example, Patent Document 17).

### CITATION LIST

### PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-149171 A
Patent Document 14: JP 2011-65934 A
Patent Document 15: JP WO 2012/077268 A1
Patent Document 16: WO 2014/002356 A1
Patent Document 17: JP 2013-101770 A

### NON PATENT LITERATURE

Non Patent Document 1: Journal of BATTERY ASSOCIATION OF JAPAN "Denchi", May 1, 2010, p10.
Non Patent Document 2: A. Hohl, T. Wieder, P. A. van Aken, T. E. Weirich, G. Denninger, M. Vidal, S. Oswald, C. Deneke, J. Mayer, and H. Fuess, J. Non-Cryst. Solids, 320, (2003 ), 255.
Non Patent Document 3: V. Kapaklis, J. Non-Crystalline Solids, 354 (2008) 612.
Non Patent Document 4: Mariko Miyachi, Hironori Yamamoto, and Hidemasa Kawai, J. Electrochem. Soc. 2007, volume 154, issue 4, A376-A380.

### SUMMARY OF INVENTION

### TECHNICAL PROBLEM

For a lithium-ion secondary battery using a silicon-based material having high charge and discharge capacities, cycle characteristics comparable to those of a lithium-ion secondary battery using a carbon-based active material have been desired. Among the silicon-based materials, silicon oxide has a potential to obtain higher cycle characteristics, and various improvements have been made. However, even with the aforementioned various techniques on particle size regulation of the negative electrode active material, inhibition of decomposition of the electrolyte liquid on a surface of the negative electrode active material is insufficient for repeated charge and discharge, and the cycle characteristics durable for a practical level have not been obtained.

The reason is presumed as follows. In Patent Document 14, wet classification was performed with water to change an oxidation state of Si on the surface, and SiOₓ powders having significantly different values of "x" are used to regulate D90/D10 and an amount of the fine powder with 1 µm or less. Relative evaluation between: first efficiency and cycle characteristics; and the particle size distribution has not been performed.

Patent Document 15 regulates D50 and D50/D10 of the SiOₓ powders (obtained by wet classification with water, similarly to Patent Document 14) before formation of a carbon coating, and a BET specific surface area of a negative electrode active material after formation of the carbon coating. However, Examples just refer to a difference in an initial discharge capacity with a relatively small particle size being D50 of 4.41 to 5.35 µm, and D90 and D99.9 are not referred to. D0.1 and a BET specific surface area of the SiOₓ powder before formation of the carbon coating are not referred to. As for particle sizes on a small particle size side, information on particle size distribution of powder can be more precisely obtained by regulating D0.1. Since the BET specific surface area of the negative electrode active material significantly varies depending on not only a surface state of the silicon oxide particles to be a base material but also a state of the carbon coating formed on the surface of the negative electrode active material, the BET specific surface area is insufficient as a substantial factor of inhibiting the surface reaction of the silicon oxide particles. Furthermore, it is described that there is no difference in cycle characteristics (10 cycles) between Example with D50 of approximately 5 um and Comparative Example with D50 of 9.36 um. However, evaluation with a coin battery is unsuitable for a long-term cycle test exceeding 50 cycles because a Li positive electrode is typically deteriorated with repeated charge-discharge cycles. Therefore, evaluation of deterioration of the negative electrode due to a reaction between the electrolyte liquid and the negative electrode active material requires charge-discharge cycles exceeding 100 cycles, and a full cell in which LCO (lithium cobaltate), etc. is used as a positive electrode active material for the positive electrode is needed to use.

Patent Document 16 and Patent Document 17 do not refer to the particle size distribution and the BET surface area of SiOₓ before formation of the carbon coating, and in Patent Document 17, D90 is as small as 5 um or less.

The present invention has been made in view of the aforementioned problem. An object of the present invention is to provide a negative electrode active material that can improve the cycle characteristics when used as the negative electrode active material for a negative electrode of a secondary battery.

### SOLUTION TO PROBLEM

To achieve the above object, the present invention provides a negative electrode active material comprising silicon monoxide particles, wherein the silicon monoxide particles satisfy that, in volumetric basis distribution measured with a laser-diffraction method particle size distribution measurement device, an accumulative 0.1%-particle-size D0.1 satisfies 1.2 um ≤ D0.1 ≤ 3.0 um, an accumulative 10%-particle-size D10 satisfies 3.5 um ≤ D10 ≤ 7.0 µm, an accumulative 50%-particle-size D50 satisfies 6.0 µm ≤ D50 ≤ 15.0 µm, and an accumulative 99.9%-particle-size D99.9 satisfies 25.0 um ≤ D99.9 ≤ 50.0 um, and the silicon monoxide particles satisfy that a BET specific surface area Sₘ satisfies 1.0 m²/g ≤ Sₘ ≤ 3.5 m²/g.

The inventive negative electrode active material has such particle size distribution and BET specific surface area, and thereby the reaction with the electrolyte liquid on the particle surfaces of the negative electrode active material can be inhibited to remarkably improve the cycle characteristics of the battery in a long-term cycle test of repeated charge and discharge.

In this time, the accumulative 0.1%-particle-size D0.1 preferably satisfies 2.0 um ≤ D0.1 ≤ 3.0 µm.

The accumulative 10%-particle-size D10 preferably satisfies 4.8 um ≤ D10 ≤ 7.0 µm.

The accumulative 50%-particle-size D50 preferably satisfies 8.0 um ≤ D50 ≤ 15.0 µm.

The negative electrode active material containing the silicon monoxide having such particle size distribution can more effectively inhibit the reaction with the electrolyte liquid on the particle surfaces to remarkably improve the cycle characteristics of the battery.

In the inventive negative electrode active material, the BET specific surface area Sₘ preferably satisfies 1.0 m²/g ≤ Sₘ ≤ 2.2 m²/g.

The negative electrode active material having such a BET specific surface area can yield more appropriate reaction area between the electrolyte liquid and the silicon monoxide particles to remarkably improve the cycle characteristics of the battery.

In the inventive negative electrode active material, the silicon monoxide particles are preferably coated with a carbon coating.

The negative electrode active material having such silicon monoxide particles coated with the carbon coating can impart conductivity to the surfaces of the silicon monoxide particles.

In addition, the present invention also provides a negative electrode comprising the above negative electrode active material.

Such a negative electrode inhibits the reaction with the electrolyte liquid on the particle surfaces of the negative electrode active material in the long-term cycle test of repeated charge and discharge when assembled into a secondary battery, and can remarkably improve the cycle characteristics of the battery.

In addition, the present invention also provides a lithium-ion secondary battery comprising: the above negative electrode; a positive electrode; a separator; and an electrolyte.

Such a lithium-ion secondary battery inhibits the reaction with the electrolyte liquid on the particle surfaces of the negative electrode active material in the long-term cycle test of repeated charge and discharge, and can remarkably improve the cycle characteristics of the battery.

### ADVANTAGEOUS EFFECTS OF INVENTION

The inventive negative electrode active material has the specific particle size distribution and BET specific surface area, and thereby inhibits the reaction with the electrolyte liquid on the particle surfaces of the negative electrode active material in the long-term cycle test of repeated charge and discharge, and can remarkably improve the cycle characteristics, in particular, cycle characteristics in the long-term cycle test, of the battery.

### BRIEF DESCRIPTION OF DRAWINGS

FIG. 1 is a graph indicating a number of cycles retaining 70% discharge capacity relative to D0.1 of silicon monoxide particles.
FIG. 2 is a graph indicating a number of cycles retaining 70% discharge capacity relative to D10 of silicon monoxide particles.
FIG. 3 is a graph indicating a number of cycles retaining 70% discharge capacity relative to D50 of silicon monoxide particles.
FIG. 4 is a graph indicating a number of cycles retaining 70% discharge capacity relative to D99.9 of silicon monoxide particles.
FIG. 5 is a graph indicating a number of cycles retaining 70% discharge capacity relative to a BET specific surface area of silicon monoxide particles.
FIG. 6 is a graph indicating a number of cycles retaining 70% discharge capacity relative to a BET specific surface area of silicon monoxide particles coated with a carbon coating.

### DESCRIPTION OF EMBODIMENTS

The present inventors have considered that deterioration of a negative electrode in long-term cycle characteristics is mainly due to decomposition of an electrolyte liquid on surfaces of silicon monoxide particles. The present inventors have made earnest study on regulation of particle sizes of silicon monoxide particles constituting the negative electrode active material, and consequently found that the cycle characteristics can be remarkably improved while keeping initial charge-discharge characteristics by setting a BET specific surface area of the silicon monoxide particles in addition to setting particle size distribution of the silicon monoxide particles to be a base material within appropriate ranges. This finding has led to the present invention.

Hereinafter, embodiments of the present invention will be described, but the present invention is not limited thereto.

### <Negative Electrode Active Material>

The inventive negative electrode active material is a negative electrode active material comprising silicon monoxide particles. The silicon monoxide particles satisfy that, in volumetric basis distribution measured with a laser-diffraction method particle size distribution measurement device, the following requirements.
- An accumulative 0.1%-particle-size D0.1 satisfies 1.2 um ≤ D0.1 ≤ 3.0 um.
- An accumulative 10%-particle-size D10 satisfies 3.5 um ≤ D10 ≤ 7.0 um.
- An accumulative 50%-particle-size D50 satisfies 6.0 um ≤ D50 ≤ 15.0 um.
- An accumulative 99.9%-particle-size D99.9 satisfies 25.0 um ≤ D99.9 ≤ 50.0 um.

The silicon monoxide particles contained in the inventive negative electrode active material satisfy that a BET specific surface area Sₘ satisfies 1.0 m²/g ≤ Sₘ ≤ 3.5 m²/g.

In the description of the present invention, the BET specific surface area is a value measured by a BET one-point method measured with an amount of adsorbed N₂ gas.

More preferably, the silicon monoxide particles contained in the inventive negative electrode active material satisfy at least any of 2.0 um ≤ D0.1 ≤ 3.0 um, 4.8 um ≤ D10 ≤ 7.0 um, 8.0 um ≤ D50 ≤ 15.0 um, and a BET specific surface area Sₘ satisfying 1.0 m²/g ≤ Sₘ ≤ 2.2 m²/g.

The silicon oxide is a general term of amorphous silicon oxide, and silicon oxide before disproportionation is represented by the general formula SiOx (0.5≤x≤1.6). As for this silicon oxide, silicon monoxide (SiO) in which "x" represents 1 or is close to 1 is obtained by heating a mixture of silicon dioxide and metal silicon, and cooling and precipitating the generated silicon monoxide gas, for example. "x" satisfies 0.9≤x≤1.1, for example.

To set the silicon monoxide particles to have the aforementioned specific particle size range of the present invention, the particle size range can be appropriately regulated by a treatment such as crushing and classification. For crushing, a well-known apparatus may be used. For example, used are: a ball mill and a medium stirring mill in which a crushing medium such as balls and beads are moved to crush a material to be crushed by utilizing an impact force, frictional force, and compressive force of kinetic energy of the crushing medium; a roller mill in which a compressive force of a roller is utilized to perform crushing; a jet mill in which a material to be crushed is collided to a lining or collided to particles each other at a high speed to perform crushing with an impact force of the impact; a hammer mill, a pin mill, or a disk mill in which a material to be crushed is crushed by utilizing an impact force of rotation of a rotor on which a hammer, a blade, a pin, etc. is fixed; a colloid mill utilizing a shearing force; and a high-pressure wet counter-collision disperser "Ultimizer". Both of wet crushing and dry crushing are used. Only crushing yields broad particle size distribution, and thus dry classification, wet classification, or sieving classification is used after the crushing in order to further regulate the particle size distribution. The dry classification mainly uses air flow, and dispersion, separation (separation between fine particles and coarse particles), trapping (separation between solid and gas), and discharge processes are sequentially or simultaneously performed. In order not to decrease classification efficiency due to interaction between particles, particle shape, turbulence of the air flow, speed distribution, static electricity, etc., a pretreatment (regulation of moisture, dispersibility, humidity, etc.) is performed before the classification, or moisture and an oxygen concentration in the air flow to be used are regulated to use. With a dry type integrated with a classifier, such as a cyclone, crushing and classification are performed once to achieve the desired particle size distribution. To set the particle size distribution and the BET specific surface area of the inventive silicon monoxide particles, it is effective that jet mill crushing so as not to increase the BET specific surface area is performed, and a small particle size side is cut by air-flow classification with a classifier.

The accumulative 0.1%-particle-size D0.1 of the silicon monoxide particles is set to 1.2 to 3.0 um as noted above, and preferably set to 2.0 to 3.0 um. The accumulative 10%-particle-size D10 of the silicon monoxide particles is set to 3.5 to 7.0 um, and preferably set to 4.8 to 7.0 um. The accumulative 50%-particle-size D50 of the silicon monoxide particles is set to 6.0 to 15.0 um, and preferably set to 8.0 to 15.0 µm.

As noted above, the accumulative 99.9%-particle-size D99.9 of the silicon monoxide particles is set to 25.0 to 50.0 um. Meanwhile, when D99.9 is larger than 50.0 um, coarse particles may expand and contract due to charge and discharge to eliminate a conductive path in a layer of the negative electrode active material. Even after production of the electrode, the coarse particles may damage the separator due to pressing, etc. Thus, setting D0.1 to 3.0 um or less, D10 to 7.0 um or less, and D50 to 15.0 um or less as noted above can prevent D99.9 from exceeding 50 µm.

The BET specific surface area of the silicon monoxide particles contained in the inventive negative electrode active material is set to 1.0 to 3.5 m²/g as noted above, and preferably set to 1.0 to 2.2 m²/g. Setting the BET specific surface area to 3.5 m²/g or less reduces the reaction area between the electrolyte liquid and the silicon monoxide particles, and thereby the silicon monoxide particles can remarkably improve the cycle characteristics when used as the negative electrode active material for a lithium-ion secondary battery. The reason why this BET specific surface area is set to 1.0 m²/g or more is that it is industrially difficult to produce silicon monoxide particles having a BET specific surface area of less than 1.0 m²/g relative to silicon monoxide particles with D50 satisfying 6.0 um ≤ D50 ≤ 15.0 µm.

Examples of a method for imparting conductivity to the silicon monoxide particles to improve battery characteristics include: a method of mixing with conductive particles such as graphite; a method of coating surfaces of the above composite particles with a carbon coating; and a method of combination of both of them. Among these, coated particles in which surfaces of the silicon monoxide particles are coated with a carbon coating are preferable. A method for coating the surface with the carbon coating is preferably a chemical vapor deposition (CVD) method.

Examples of the chemical vapor deposition (CVD) method include a method of chemical vapor deposition of carbon to form the carbon coating on the silicon monoxide particles in an atmosphere of organic substance gas and/or vapor that can be pyrolyzed to generate carbon within a temperature range of 600 to 1,200°C.

The chemical vapor deposition (CVD) may be applied under both of a normal pressure and a reduced pressure, and examples of the reduced pressure include a reduced pressure of 50 to 30,000 Pa. As an apparatus used in a step of forming the carbon coating, commonly known apparatuses such as a bath-type furnace, a continuous furnace such as a rotary kiln and a roller hearth kiln, and a fluidized bed may be used. In a case where the vapor deposition apparatus is a bath-type furnace in which particles are left to stand, vapor deposition performed under a reduced pressure can achieve further uniform coating with carbon to improve the battery characteristics.

Examples of a carbon source for forming the carbon coating with the chemical vapor deposition include various organic substances as follows, but a pyrolysis temperature, a vapor deposition rate, characteristics of the carbon coating formed after the vapor deposition, etc. may be significantly different depending on the used substance. A substance with a high vapor deposition rate causes insufficient uniformity of the carbon coating on the surface in many cases. On the other hand, when the pyrolysis requires high temperature, silicon crystals in the silicon monoxide particles to be coated may be excessively largely grown during vapor deposition at the high temperature to cause deterioration of discharge efficiency and cycle characteristics. A crystallite size of silicon is typically determined by a Scherrer's method from a fullwidth at half maximum of a Si (111) peak in powder XRD measurement, and is preferably 50 nm or less, and further preferably 10 nm or less. A smaller crystallite size more inhibits disproportionation of the silicon monoxide with charge and discharge to yield higher cycle characteristics.

The Si crystallite size of the silicon monoxide particles in the negative electrode active material can be determined by using the following XRD apparatus, for example.

### ·XRD: D8 ADVANCE, Bruker

The measurement is performed with an X-ray source of Cu Kα radiation using a Ni filter at an output of 40 kV / 40 mA, a slit width of 0.3°, a step width of 0.008°, and a counting time of 0.15 seconds per step within 10 to 40°.

Examples of a raw material of the organic substance gas that can be pyrolyzed to generate carbon include: hydrocarbons, such as methane, ethane, ethylene, acetylene, propane, butane, butene, pentane, isobutane, and hexane; monocyclic to tricyclic aromatic hydrocarbons, such as benzene, toluene, xylene, styrene, ethylbenzene, diphenylmethane, naphthalene, phenol, cresol, nitrobenzene, chlorobenzene, indene, coumarone, pyridine, anthracene, and phenanthrene; and gas light oil, creosote oil, anthracene oil, and naphtha-decomposed tar oil obtained in a tar distillation process. These may be used singly or two or more thereof may be appropriately selected for use. From the economical viewpoint, hydrocarbon gas composed of a composition of CxHy is preferably used.

A coating amount of the carbon coating is preferably 1.0 mass% or more and 5.0 mass% or less relative to an entirety of the coated particles with the carbon coating. Although depending on the particles to be coated, setting the amount of the carbon coating to 1.0 mass% or more can keep substantially sufficient conductivity. Setting the amount of the carbon coating to 5.0 mass% or less allows a proportion of carbon in the material of the negative electrode active material to be appropriate, not to be excessive, and charge and discharge capacities can be achieved when the particles are used as the negative electrode active material for a lithium-ion secondary battery.

In the present invention, the aforementioned negative electrode active material in which the silicon monoxide particles are coated with the carbon film is used to produce the negative electrode, and the lithium-ion secondary battery can be manufactured.

### Negative Electrode

When a negative electrode is produced by using the above negative electrode active material, a conductive agent such as carbon and graphite may be further added. In this case, a type of the conductive agent is not particularly limited, and may be any electron conductive material that does not cause decomposition or deterioration in the assembled battery. Specifically, metal particles or metal fibers of Al, Ti, Fe, Ni, Cu, Zn, Ag, Sn, Si, etc.; or graphite, such as natural graphite, artificial graphite, various coke particles, mesophase carbon, vapor-grown carbon fiber, pitch-based carbon fiber, PAN-based carbon fiber, and various baked resins may be used.

An example of a method for preparing the negative electrode is as follows. The aforementioned negative electrode active material and, as necessary, the conductive agent, other additives such as a binder such as carboxymethylcellulose (hereinafter, referred to as CMC), and a solvent such as an organic solvent or water are kneaded to form a paste mixture, and this mixture is applied on a sheet of a current collector. In this case, materials commonly used as a current collector of a negative electrode, such as copper foil and nickel foil, may be used as the current collector without particular limitation of thickness and surface treatment. A method for forming the sheet from the mixture is not particularly limited, and a known method may be used.

### Lithium-Ion Secondary Battery

The lithium-ion secondary battery is a lithium-ion secondary battery having at least a positive electrode, a negative electrode, and a lithium-ion-conductive non-aqueous electrolyte, and the negative electrode active material according to the present invention is used for the above negative electrode. The inventive lithium-ion secondary battery has a characteristic point of having the negative electrode using the negative electrode active material composed of the above coated particles, and any known materials of the positive electrode, the electrolyte, a separator, etc. other than the negative electrode, and a battery shape, etc. may be used, and are not particularly limited. As noted above, the inventive negative electrode active material yields good battery characteristics (charge and discharge capacities and cycle characteristics) and in particular, excellent cycle durability when used as the negative electrode active material for the lithium-ion secondary battery.

As a positive electrode active material, an oxide, a lithium compound, chalcogen compounds, etc. of a transition metal, such as LiCoO₂, LiNiO₂, LiMn₂O₄, V₂O₅, MnO₂, TiS₂, and MoS₂, are used.

As the electrolyte, a non-aqueous solution containing a lithium salt, such as lithium hexafluorophosphate and lithium perchlorate, is used, for example. As the non-aqueous solvent, propylene carbonate, ethylene carbonate, diethyl carbonate, dimethoxyethane, γ-butyrolactone, and 2-methyltetrahydrofuran are used singly or in combination of two or more thereof. Other various non-aqueous electrolytes and solid electrolytes may also be used.

### EXAMPLE

Hereinafter, the present invention will be more specifically described with showing Examples and Comparative Examples of the present invention, but the present invention is not limited to these Example.

First, silicon monoxide gas generated by heating a mixture of silicon dioxide and metal silicon was cooled and precipitated to obtain silicon monoxide (SiOx) with "x" of approximately 1.0. Then, this SiOx (x=1.0) was roughly crushed with a jaw crusher (manufactured by Maekawa Kogyosho Co., Ltd.), and further crushed with a ball mill (manufactured by Makino Corporation) for 15 minutes to obtain silicon monoxide particles having D50 of 100 um. These particles were finely crushed with a jet mill (KJ800, manufactured by Kurimoto, Ltd.) under conditions of a pressure of compressed air of 0.58 MPa and a number of rotation of the classifier of 3,500 rpm, and recovered with a cyclone. These particles were measured with a laser-diffraction method particle size distribution measurement device (SALD-3100, SHIMADZU CORPORATION) under a condition of a refractive index of 2.05-0.00i to demonstrate to be silicon monoxide particles having D0.1 of 1.2 µm, D10 of 3.5 µm, D50 of 7.9 um, D99.9 of 28.1 um, and a BET specific surface area of 2.9 m²/g.

These particles were spread on a tray so that a thickness of the powder layer was 10 mm, and fed into a batch-type heating furnace. A temperature inside the furnace was raised to 1,000°C at a temperature-raising rate of 200°C/hr while reducing a pressure inside the furnace with an oil rotary vacuum pump. After the temperature reached 1,000°C, methane was passed inside the furnace at 0.3 L/min to perform a carbon-coating treatment for 10 hours. After methane was stopped, the temperature inside the furnace was lowered and cooled, and the recovered aggregate was disintegrated to obtain black particles.

The obtained black particles were conductive particles having D50 of 7.9 um, a BET specific surface area of 2.2 m²/g, an amount of the carbon coating relative to the black particles of 2.8 mass%, and a crystallite size of silicon of 5.0 nm.

### <Battery Evaluation>

Then, battery evaluation was performed by the following method using the obtained carbon-coated particles as the negative electrode active material.

First, the negative electrode active material, graphite, a conductive auxiliary 1 (carbon nanotube, CNT), a conductive auxiliary 2 (carbon fine particles having a median size of approximately 50 nm), sodium polyacrylate, and CMC were mixed at a dry mass ratio of 9.3:83.7:1:1:4:1, and then diluted with pure water to prepare a negative electrode mixture slurry.

This slurry was applied on a copper foil with 15 um in thickness, and dried in a vacuum atmosphere at 100°C for 1 hour. An amount of deposition (also referred to as an area density) of a negative electrode active material layer per unit area on one surface of a negative electrode after drying was 7.0 mg/cm².

Then, a solvent (ethylene carbonate (EC) and dimethyl carbonate (DMC)) was mixed, and then an electrolyte salt (lithium hexafluorophosphate: LiPF₆) was dissolved to prepare an electrolyte liquid. In this case, a composition of the solvent was EC:DMC = 30:70 at a volume ratio, and a content of the electrolyte salt was 1 mol/kg relative to the solvent. As additives, vinylene carbonate (VC) and fluoroethylene carbonate (FEC) were added at 1.0 mass% and 2.0 mass%, respectively.

Then, a coin battery was assembled as follows.

First, Li foil with 1 mm in thickness was punched to a diameter of 16 mm, and stacked on an aluminum clad. The obtained electrode was punched to a diameter of 15 mm, disposed opposite to a Li counter electrode across a separator, the electrolyte liquid was injected, and then a 2032 coin battery was produced.

The first efficiency was measured under the following conditions. First, charge was performed at a rate equivalent to 0.03 C. The charge was performed with a CCCV mode. CV was 0 V, and the termination current was 0.04 mA. Discharge was performed at similarly 0.03 C at a discharge voltage of 1.2 V with CC discharge.

For determining initial charge-discharge characteristics, the first efficiency (hereinafter, which may be referred to as initial efficiency) was calculated. The first efficiency was calculated with the formula represented by: First efficiency (%) = (First discharge capacity / First charge capacity) × 100.

A counter positive electrode was designed from the obtained initial data, and battery evaluation was performed. For a positive electrode active material, LCO (lithium cobaltate) was used.

The cycle characteristics were determined as follows. First, charge and discharge were performed with two cycles under an atmosphere at 25°C at 0.2 C for stabilizing the battery, and a discharge capacity at the second cycle was measured. The battery cycle characteristics were calculated from a discharge capacity at the third cycle, and the battery test was stopped when a retention rate of the discharge capacity reached 70%. The charge and discharge were performed with charge at 0.7 C and discharge at 0.5 C. The charge voltage was 4.3 V, the discharge termination voltage was 2.5 V, and charge termination rate was 0.07 C.

### Examples 2 to 10

SiOx (x=1.0) same as in Example 1 was similarly crushed with a ball mill to have D50 of 100 um. In the subsequent jet mill process, the number of rotation of the classifier, the crushing pressure, and the atmosphere were regulated to produce silicon monoxide particles having powder physical properties shown in Table 1. The silicon monoxide particles were coated with the carbon film to produce conductive particles in the same manner as in Example 1, and the obtained conductive particles were used to produce negative electrodes and evaluate batteries.

### Comparative Example 1

SiOx (x=1.0) same as in Example 1 was similarly crushed to 100 um with a ball mill. In the subsequent jet mill process, fine crushing was performed under conditions of a pressure of compressed air of a classifier of 0.52 MPa and a number of rotation of 5000 rpm, and recovered with a cyclone. The particles recovered with the cyclone were silicon monoxide particles having D0.1 of 1.8 µm, D10 of 4.5 µm, D50 of 6.6 um, D99.9 of 18.9 um, and a BET specific surface area of 3.3 m²/g. The silicon monoxide particles were coated with the carbon film to produce conductive particles in the same manner as in Example 1, and the obtained conductive particles were used to produce a negative electrode and evaluate a battery.

### Comparative Example 2

SiOx (x=1.0) same as in Example 1 was used and crushed with a ball mill for 30 minutes so that D50 was 20 um. In the subsequent jet mill process, fine crushing was performed under conditions of a pressure of compressed air of a classifier of 0.45 MPa and a number of rotation of 5500 rpm, and recovered with a cyclone. The particles recovered with the cyclone were silicon monoxide particles having D0.1 of 0.4 µm, D10 of 2.5 µm, D50 of 5.8 um, D99.9 of 18.5 um, and a BET specific surface area of 3.7 m²/g. The obtained silicon monoxide particles were coated with the carbon film to obtain conductive particles having D50 of 6.1 um, a BET specific surface area of 3.2 m²/g, and an amount of the carbon coating relative to the black particles of 3.5 mass%. Using the obtained conductive particles, a negative electrode was produced to evaluate a battery in the same manner as in Example 1.

### Comparative Example 3

Conductive particles were produced in the same manner as in Example 1 except that: the silicon monoxide particles obtained in Comparative Example 2 were used; and the passing time of methane was 7 hours. The obtained conductive particle had D50 of 6.0 um, a BET specific surface area of 3.2 m²/g, and an amount of the carbon coating relative to the black particles of 2.7 mass%. Using the obtained conductive particles, a negative electrode was produced to evaluate a battery in the same manner as in Example 1.

### Comparative Example 4

Using the ball-milled powder with D50 of 100 um obtained in Example 1, fine crushing was performed with a jet mill under conditions of a pressure of compressed air of a classifier of 0.40 MPa and a number of rotation of 2200 rpm, and recovered with a cyclone. The particles recovered with the cyclone were silicon monoxide particles having D0.1 of 3.5 µm, D10 of 7.2 µm, D50 of 18.9 um, D99.9 of 53.4 um, and a BET specific surface area of 1.3 m²/g. The obtained silicon monoxide particles were coated with the carbon film to obtain conductive particles having D50 of 19.0 um, a BET specific surface area of 1.2 m²/g, and an amount of the carbon coating relative to the black particles of 2.0 mass%. Using the obtained conductive particles, a negative electrode was produced to evaluate a battery in the same manner as in Example 1.

### Comparative Example 5

Using SiOx (x=1.0) same as in Example 1, crushing was performed with a ball mill for 1 hour. These silicon monoxide particles had D0.1 of 0.3 µm, D10 of 1.5 µm, D50 of 9.1 um, D99.9 of 57.0 um, and a BET specific surface area of 2.8 m²/g. The fine crushing and the classification procedure with a jet mill were not performed, and the silicon monoxide particles were coated with the carbon film similarly to Example 1 to obtain conductive particles having D50 of 9.3 um, a BET specific surface area of 2.5 m²/g, and an amount of the carbon coating relative to the black particles of 3.1 mass%. Using the obtained conductive particles, a negative electrode was produced to evaluate a battery in the same manner as in Example 1.

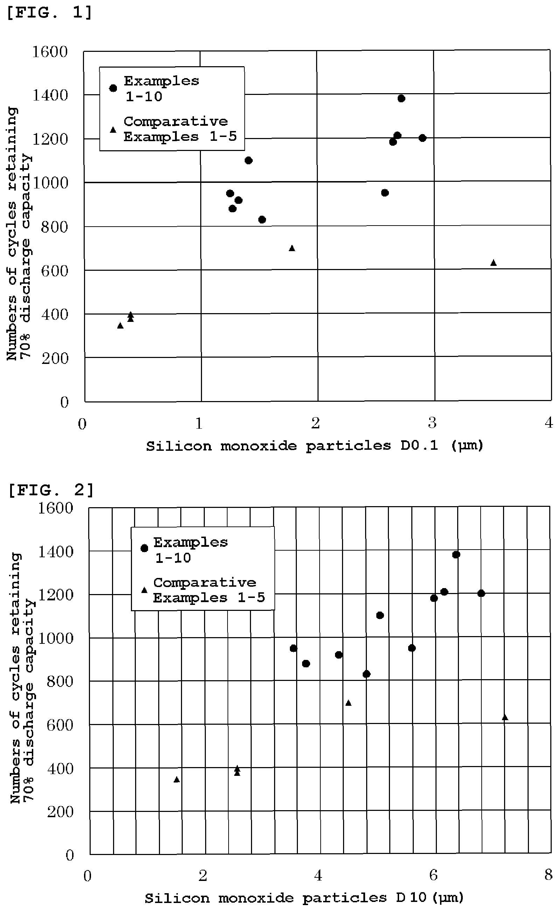

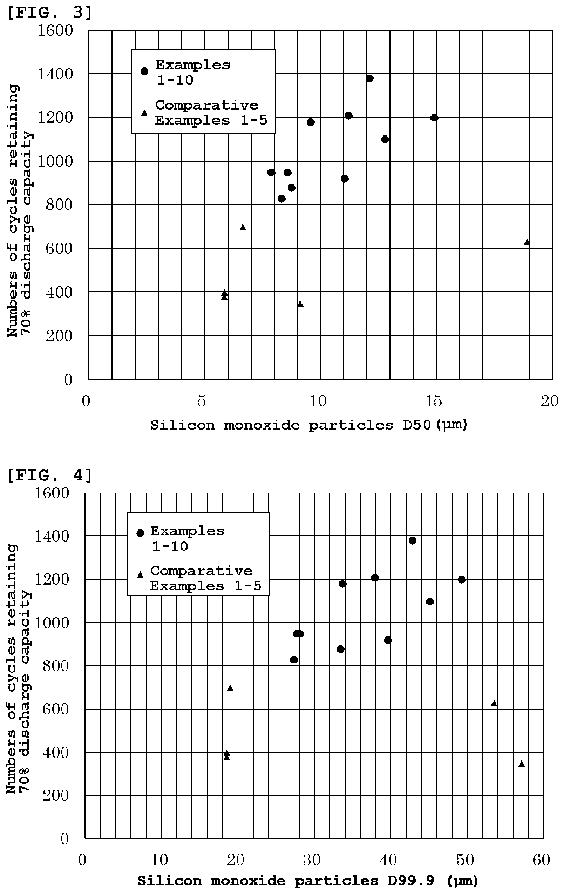

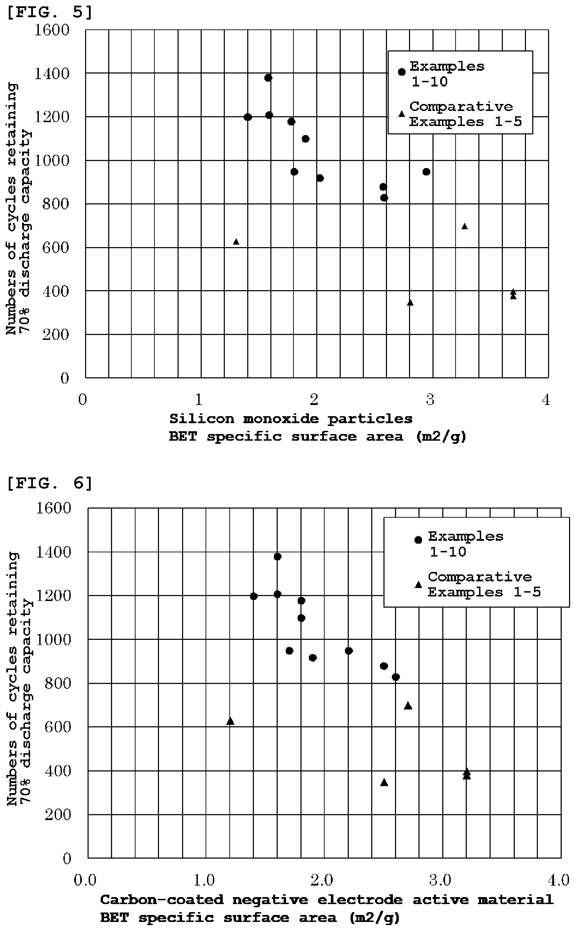

Table 1 shows the conditions of Examples and Comparative Examples. Table 2 shows the powder physical properties and the battery characteristics. FIG. 1 shows numbers of cycles retaining 70% discharge capacity of the negative electrode active materials in the carbon-coated state relative to D0.1 of the silicon monoxide particles in the carbon-uncoated state. FIG. 2 shows numbers of cycles retaining 70% discharge capacity of the negative electrode active materials in the carbon-coated state relative to D10 of the silicon monoxide particles in the carbon-uncoated state. FIG. 3 shows numbers of cycles retaining 70% discharge capacity of the negative electrode active materials in the carbon-coated state relative to D50 of the silicon monoxide particles in the carbon-uncoated state. FIG. 4 shows numbers of cycles retaining 70% discharge capacity of the negative electrode active materials in the carbon-coated state relative to D99.9 of the silicon monoxide particles in the carbon-uncoated state. FIG. 5 shows numbers of cycles retaining 70% discharge capacity relative to the BET specific surface areas of the silicon monoxide particles in the carbon-uncoated state. FIG. 6 shows numbers of cycles retaining 70% discharge capacity of the negative electrode active materials in the carbon-coated state relative to the BET specific surface areas of the silicon monoxide particles in the carbon-coated state.

From FIG. 1, it is found that the number of cycles is 800 or more within the range where the accumulative 0.1%-particle-size D0.1 of the silicon monoxide particles satisfies 1.2 um ≤ D0.1 ≤ 3.0 um. From FIG. 2, it is found that the number of cycle is 800 or more within the range where the accumulative 10%-particle-size D10 of the silicon monoxide particles satisfies 3.5 um ≤ D10 ≤ 7.0 um. From FIG. 3, it is found that the number of cycles is 800 or more within the range where the accumulative 50%-particle-size D50 of the silicon monoxide particles satisfies 6.0 um ≤ D50 ≤ 15.0 um. From FIG. 4, it is found that the number of cycles is 800 or more within the range where the accumulative 99.9%-particle-size D99.9 of the silicon monoxide particles satisfies 25.0 um ≤ D99.9 ≤ 50.0 um. From FIG. 5, it is found that the number of cycles is 800 or more within the range where the BET specific surface area Sₘ of the silicon monoxide particles Sₘ satisfies 1.0 m²/g ≤ Sₘ ≤ 3.5 m²/g.

**[Table 1]**

| Table 1 | Jet-mill classification conditions | | CVD conditions | |
|---|---|---|---|---|
| | Number of rotation (rpm) | Crushing pressure (Mpa) | Temperature (°C) | Time (h) |
| Example 1 | 4500 | 0.52 | 1000 | 10 |
| Example 2 | 4400 | 0.52 | 1000 | 10 |
| Example 3 | 4300 | 0.52 | 1000 | 10 |
| Example 4 | 3700 | 0.52 | 1000 | 10 |
| Example 5 | 3500 | 0.52 | 1000 | 10 |
| Example 6 | 4300 | 0.58 | 1000 | 10 |
| Example 7 | 4000 | 0.58 | 1000 | 10 |
| Example 8 | 3700 | 0.58 | 1000 | 10 |
| Example 9 | 3500 | 0.58 | 1000 | 10 |
| Example 10 | 3000 | 0.60 | 1000 | 10 |
| Comparative Example 1 | 5000 | 0.52 | 1000 | 10 |
| Comparative Example 2 | 5500 | 0.45 | 1000 | 10 |
| Comparative Example 3 | 5500 | 0.45 | 1000 | 7 |
| Comparative Example 4 | 2200 | 0.40 | 1000 | 10 |
| Comparative Example 5 | No classification procedure | | 1000 | 10 |

**[Table 2]**

| Table 2 | Powder physical properties (silicon monoxide particles) before CVD | | | | | Powder physical properties (negative electrode active material) after CVD | | | | Battery characteristics | | |
|---|---|---|---|---|---|---|---|---|---|---|---|---|
| | D0.1 (µm) | D10 (µm) | D50 (µm) | D99.9 (µm) | BET (m² /g) | D50 (µm) | BET (m² /g) | C amount (mass%) | si (111) crystallite (nm) | First discharge capacity (mAh/g) | First efficiency | Number of cycles |
| Example 1 | 1.2 | 3.5 | 7.9 | 28.1 | 2.9 | 7.9 | 2.2 | 2.8 | 5.0 | 1550 | 70.6% | 950 |
| Example 2 | 1.5 | 4.8 | 8.3 | 27.3 | 2.6 | 8.4 | 2.6 | 2.6 | 5.1 | 1540 | 70.8% | 830 |
| Example 3 | 1.3 | 3.7 | 8.7 | 33.4 | 2.6 | 8.8 | 2.5 | 2.5 | 5.0 | 1561 | 71.0% | 880 |
| Example 4 | 1.3 | 4.3 | 11.0 | 39.6 | 2.0 | 11.1 | 1.9 | 2.4 | 5.2 | 1555 | 71.3% | 920 |
| Example 5 | 1.4 | 5.0 | 12.8 | 45.1 | 1.9 | 12.9 | 1.8 | 2.4 | 5.2 | 1540 | 71.3% | 1100 |
| Example 6 | 2.6 | 5.6 | 8.6 | 27.7 | 1.8 | 8.7 | 1.7 | 2.6 | 5.1 | 1568 | 70.9% | 950 |
| Example 7 | 2.6 | 6.0 | 9.6 | 33.7 | 1.8 | 9.7 | 1.8 | 2.7 | 5.0 | 1562 | 70.8% | 1180 |
| Example 8 | 2.7 | 6.2 | 11.2 | 37.8 | 1.6 | 11.3 | 1.6 | 2.5 | 5.2 | 1563 | 71.0% | 1210 |
| Example 9 | 2.7 | 6.4 | 12.1 | 42.8 | 1.6 | 12.2 | 1.6 | 2.4 | 5.1 | 1567 | 70.9% | 1380 |
| Example 10 | 2.9 | 6.8 | 14.9 | 49.2 | 1.4 | 15.0 | 1.4 | 2.0 | 5.1 | 1557 | 70.9% | 1200 |
| Comparative Example 1 | 1.8 | 4.5 | 6.6 | 18.9 | 3.3 | 6.7 | 2.7 | 2.7 | 5.1 | 1559 | 70.7% | 700 |
| Comparative Example 2 | 0.4 | 2.5 | 5.8 | 18.5 | 3.7 | 6.1 | 3.2 | 3.5 | 5.2 | 1547 | 70.8% | 400 |
| Comparative Example 3 | 0.4 | 2.5 | 5.8 | 18.5 | 3.7 | 6.0 | 3.2 | 2.7 | 5.2 | 1556 | 70.7% | 380 |
| Comparative Example 4 | 3.5 | 7.2 | 18.9 | 53.4 | 1.3 | 19.0 | 1.2 | 2.0 | 5.1 | 1520 | 70.2% | 630 |
| Comparative Example 5 | 0.3 | 1.5 | 9.1 | 57.0 | 2.8 | 9.3 | 2.5 | 3.1 | 3.3 | 1530 | 70.1% | 350 |

Examples 1 to 10 have been confirmed to be the lithium-ion secondary battery in which the cycle characteristics are remarkably improved while keeping the initial charge-discharge characteristics compared with Comparative Examples 1 to 5. In Comparative Examples 1 to 3, the silicon monoxide particles do not satisfy the optimal requirements of the particle size distribution, have the large BET specific surface area, and thereby fail to yield cycle characteristics comparable to Examples. In Comparative Examples 4 and 5, it has been confirmed that the negative electrode active material composed of the silicon monoxide particles having particle size distribution of D99.9 of more than 50 um deteriorates the cycle characteristics. It is presumed that coarse particles expand and contract due to charge and discharge to eliminate the conductive path.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A negative electrode active material, comprising silicon monoxide particles, wherein
the silicon monoxide particles satisfy that, in volumetric basis distribution measured with a laser-diffraction method particle size distribution measurement device,
an accumulative 0.1%-particle-size D0.1 satisfies 1.2 um ≤ D0.1 ≤ 3.0 um,
an accumulative 10%-particle-size D10 satisfies 3.5 um ≤ D10 ≤ 7.0 µm,
an accumulative 50%-particle-size D50 satisfies 6.0 um ≤ D50 ≤ 15.0 µm, and
an accumulative 99.9%-particle-size D99.9 satisfies 25.0 um ≤ D99.9 ≤ 50.0 um, and
the silicon monoxide particles satisfy that a BET specific surface area Sₘ satisfies 1.0 m²/g ≤ Sₘ ≤ 3.5 m²/g.

2. The negative electrode active material according to claim 1, wherein the accumulative 0.1%-particle-size D0.1 satisfies 2.0 um ≤ D0.1 ≤ 3.0 µm.

3. The negative electrode active material according to claim 1 or 2, wherein the accumulative 10%-particle-size D10 satisfies 4.8 um ≤ D10 ≤ 7.0 µm.

4. The negative electrode active material according to any one of claims 1 to 3, wherein the accumulative 50%-particle-size D50 satisfies 8.0 um ≤ D50 ≤ 15.0 µm.

5. The negative electrode active material according to any one of claims 1 to 4, wherein the BET specific surface area Sₘ satisfies 1.0 m²/g ≤ Sₘ ≤ 2.2 m²/g.

6. The negative electrode active material according to any one of claims 1 to 5, wherein the silicon monoxide particles are coated with a carbon coating.

7. A negative electrode, comprising the negative electrode active material according to any one of claims 1 to 6.

8. A lithium-ion secondary battery, comprising:
the negative electrode according to claim 7;
a positive electrode;
a separator; and
an electrolyte.
